(19) Europäisches Patentamt
European Patent Office
Office européen des brevets

(11) Veröffentlichungsnummer: **0 405 327 B1**

# (12) EUROPÄISCHE PATENTSCHRIFT

(45) Veröffentlichungstag der Patentschrift: **19.10.94**

(51) Int. Cl.⁵: **C07F 1/02**, C08F 4/48, C08F 36/04

(21) Anmeldenummer: **90111735.8**

(22) Anmeldetag: **21.06.90**

## (54) Bifunktionelle Initiatoren für die anionische Polymerisation und Verfahren zu ihrer Herstellung.

(30) Priorität: **28.06.89 DE 3921140**
**16.08.89 DE 3926925**

(43) Veröffentlichungstag der Anmeldung:
**02.01.91 Patentblatt 91/01**

(45) Bekanntmachung des Hinweises auf die Patenterteilung:
**19.10.94 Patentblatt 94/42**

(84) Benannte Vertragsstaaten:
**BE DE FR GB IT NL**

(56) Entgegenhaltungen:
**GB-A- 1 499 467**
**GB-A- 2 112 787**
**US-A- 4 181 684**

(73) Patentinhaber: **BASF Aktiengesellschaft**
**Carl-Bosch-Strasse 38**
**D-67063 Ludwigshafen (DE)**

(72) Erfinder: **Bronstert, Klaus, Dr.**
**Gartenstrasse 26**
**D-6719 Carlsberg (DE)**

**EP 0 405 327 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Alkalimetallorganische Verbindungen werden als Initiatoren für die anionische Polymerisation von vorzugsweise Alkenylaromaten und/oder Dienen benutzt. Besonders gut geeignet ist Lithiumalkyl, das vergleichsweise stabil und im Gegensatz zum entsprechenden Natrium- oder Kaliumalkyl auch in Kohlenwasserstoffen löslich ist und somit eine Polymerisation in einem Kohlenwasserstoff-Lösungsmittel ermöglicht. Lebende Polymere mit Lithiumendgruppen lassen sich in hoher Ausbeute mit geeigneten Reagentien in endständig funktionalisierte Polymere umwandeln, z.B. in solche mit -OH, -SH oder Aminogruppen. Diese Reaktionen laufen am besten ab, wenn das Reaktionsmedium hauptsächlich aus Kohlenwasserstoffen besteht.

Während die bekannten monofunktionellen Lithiumalkylverbindungen als Initiatoren für die anionische Polymerisation alle Anforderungen erfüllen, weisen die bekannten bifunktionellen Initiatoren Mängel auf. Solche bifunktionellen Initiatoren, insbesondere etherfreie oder etherarme, werden z.B. benötigt, wenn man an beiden Kettenenden funktionalisierte Polymere von Dienen erzeugen will, die das Dien vorzugsweise in 1,4-Konfiguration eingebaut enthalten.

Bifunktionelle Initiatoren des Lithiums werden z.B. hergestellt durch Addition von Lithium an aromatische Ringsysteme wie z.B. Naphthalin, Biphenyl usw. oder polyarylsubstituierte Ethylene wie 1,1-Diphenylethylen oder Stilben (US-PS 3 170 903). Diese Addition gelingt nur in Gegenwart von Ethern oder anderen polaren Lösungsmitteln, deren Anwesenheit bei der Polymerisation von Dienen stört, weil das Dien in diesem Fall vorwiegend in 1,2- bzw. 3,4-Konfiguration eingebaut wird.

Polymere mit 1,2- oder 3,4-Konfiguration des Diens weisen weniger erwünschte Eigenschaften auf, u.a. eine hohe Glastemperatur, Oxidationsempfindlichkeit, Vernetzungsanfälligkeit und geringe thermische Stabilität bei der Verarbeitung. Versucht man jedoch, aus den Initiatoren den Ether zu entfernen, so verlieren sie teilweise oder ganz ihre Aktivität und/oder sie werden unlöslich.

Zur Überwindung dieser Nachteile wurde in der US-PS 3 377 404 von P. Zelinsky vorgeschlagen, die zunächst durch Umsetzung von Polyhalogenverbindungen, polykondensierten Aromaten oder polyarylierten Ethylenen mit Ethern entstehenden Dilithiuminitiatoren in einer 2. Reaktionsstufe durch Zusatz von Diolefinen zu solubilisieren und erst dann den Ether abzudestillieren.

Die so gebildeten Initiatoren sind zwar löslich in Kohlenwasserstoffen, jedoch wird bei ihrer Herstellung eine teilweise Zersetzung beobachtet, so daß damit hergestellte Polymere nur noch zum Teil mehrfunktionell sind.

Andere bifunktionelle Initiatoren werden durch Anlagerung von Li-Alkyl an Ausgangsverbindungen erzeugt, die 2 Doppelbindungen enthalten. Diese Initiatoren enthalten häufig unerwünschte monofunktionelle Anteile oder sind nicht ausreichend aktiv, reagieren unvollständig und liefern die Polymere mit zu hoher und unerwünscht breiter Molmassen-Verteilung.

L.J. Morton und M. Fetters (US-PS 3 663 634 sowie Macromolecules, 2 (1969), S. 453ff) schließlich verwenden 1,4-Di-lithium-1,1,4,4-tetraphenylbutan, hergestellt durch Reaktion von 1,1-Diphenyl-Ethylen mit metallischem Lithium in einer Mischung aus 15 % Anisol und 85 % Cyclohexan als bifunktionellen Initiator. Die Herstellung verläuft außerordentlich langsam (2 Tage und länger) und unvollständig, und es sind nur sehr niedrige Initiatorkonzentrationen zugänglich. Ferner ist der Initiator in Kohlenwasserstoffen unlöslich und muß daher zunächst mit Isopren solubilisiert werden, wobei als Nebenprodukt ein Isopren-Polymer entsteht, bevor in Cyclohexan oder Benzol polymerisiert werden kann (Macromolecules 2, j1969, S. 454, Spalte 1, 3. Absatz). Die Anwesenheit von Anisol hat schließlich wiederum eine erhebliche Erhöhung der 1,2- bzw. 3,4-Konfiguration beim Einbau von Butadien bzw. Isopren zur Folge.

Aufgabe der Erfindung war daher die Bereitstellung von Initiatoren für die anionische Polymerisation, die in ganz oder überwiegend aus Kohlenwasserstoff bestehenden Medien gut löslich, stabil und frei von monofunktionellen Anteilen sein sollten, eines einfachen für ihre Herstellung geeigneten Verfahrens, sowie die Verwendung dieser Katalysatoren für die Herstellung von an beiden Kettenenden gewachsenen, gegebenenfalls funktionalisierten Polymeren mit enger Molmassenverteilung und etwa der rechnerisch erwarteten Molmasse.

Diese Aufgabe wird erfindungsgemäß gelöst, indem man eine alkalimetallorganische Verbindung der allgemeinen Formel I

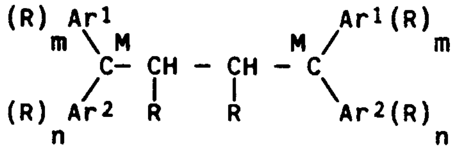

(I)

wie sie erhalten wird durch Umsetzen eines entsprechenden Diarylethylens der allgemeinen Formel (II) mit insbesondere Lithium oder einem anderen Alkalimetall (M)

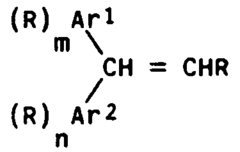

(II)

wobei $Ar^1$ und $Ar^2$ gleiche oder verschiedene Aryl- oder Stickstoff enthaltende Hetarylreste bedeuten, die einen oder mehrere ggf. getrennte oder kondensierte Ringe aufweisen, und wobei R mindestens einen von Wasserstoff verschiedenen Substituenten bedeutet, der gegenüber Alkalimetall bzw. -alkyl chemisch indifferent ist, und mit der Maßgabe, daß die Summe der C-Atome aller R - bezogen auf (II) - mindestens 3 und m und n jeweils eine ganze Zahl bis zu 4 ist.

Die Umsetzung nimmt man in einem Ether oder tertiären Amin vor. Die erhaltene Bisalkalimetallverbindung wird - wenn nötig nach Entfernung des Ether bzw. tertiären Amins - als Initiator verwendet.

In der allgemeinen Formel I oder II bedeuten $Ar^1$ und $Ar^2$ gleiche oder verschiedene aromatische, auch poly- oder heterocyclische, gegebenenfalls Stickstoff, Schwefel oder Sauerstoff enthaltende Ringsysteme. $Ar^1$, $Ar^2$ können z.B. sein Phenyl, Naphthyl, Biphenylyl, Phenanthryl, Anthryl, Phenoxyphenyl, Pyridyl, Chinolyl usw. Bevorzugt sind $Ar^1$ und $Ar^2$ Phenyl oder Naphthyl.

R bedeutet Wasserstoff oder z.B. lineares oder verzweigtes Alkyl, Aralkyl oder Cycloalkyl mit 1 bzw. 7 bzw. 5 bis 25 C-Atomen, das auch chemisch indifferente Molekülbestandteile wie Etherbrücken oder tertiäre Aminogruppen enthalten kann. Ferner können die Substituenten als Äquivalent auch ringförmige Brücken mit $Ar^1$ oder $Ar^2$ bilden, die dann jedoch wegen der erforderlichen Löslichkeit mindestens drei aliphatische C-Atome aufweisen müssen.

Insgesamt muß zur Erzielung ausreichend günstiger Eigenschaften mindestens ein R von Wasserstoff verschieden sein und die Summe aller R soll wenigstens 3 C-Atome insgesamt haben. Im allgemeinen werden nicht mehr als 30, jedenfalls aber nicht mehr als 60 C-Atome in den Substituenten R benötigt, obwohl umfangreichere Substitution nicht schadet.

Im allgemeinen nimmt die Zahl der für ausreichende Löslichkeit erforderlichen C-Atome von aromatischen, z.B. Benzol, Toluol über alicyclische, z.B. Cyclohexan, Methylcyclohexan zu rein aliphatischen Lösungsmitteln, z.B. n-Hexan, n-Heptan, iso-Octan zu.

Weniger als 3 C-Atome in den Substituenten erhöhen die Löslichkeit der Initiatoren in Kohlenwasserstoffen nicht ausreichend. Wenn Dienpolymerisate oder Copolymere in Lösungsmitteln hergestellt werden sollen, die keine oder nur sehr geringe Mengen an Ethern enthalten (0 bis 3 Mol Ether je Mol polymerisationsaktives Lithium), sollten Initiatoren mit mehr als 4 C-Atome enthaltenden Substituenten Verwendung finden.

Bei Substituenten R gleicher C-Zahl haben solche mit vorwiegend linearer oder wenig verzweigter Struktur eine besser solubilisierende Wirkung als stark verzweigte Substituenten. So ist z.B. ein Initiator aus 1,1-Diphenylethylen, der an einem Benzolkern einen n- oder iso-Butylrest trägt, besser in Kohlenwasserstoffen löslich, als einer mit einer t-Butylgruppe oder einer, bei dem zwei Substituenten ein 4 Methylengruppen aufweisendes Ringelement bilden (Struktur des Tetralins).

Bevorzugt sind als $Ar^1$ und $Ar^2$ Phenyl oder Naphthyl, der aliphatische (Formel I) bzw. olefinische (Formel II) Teil ist vorzugsweise unsubstituiert (R = H) und im übrigen sind die jeweils möglichen bis zu 8 Substituenten (außer Wasserstoff) Methylgruppen, lineares oder verzweigtes Alkyl, Cycloalkyl, Dialkylamino und/oder Alkoxyalkyl mit zusammen mehr als 3 (z.B. bis 30) C-Atomen, d.h. Verbindungen der Formel II sind Derivate des 1,1-Diphenylethylens oder des 1-Phenyl-1-(1-Naphthyl)-Ethylens, die an den aromatischen Kernen jeweils einen bis 4, gegebenenfalls tertiären Stickstoff enthaltende aliphatische Substituenten tragen, die zusammen mehr als 3 aber weniger als 30 C-Atomen enthalten.

Besonders geeignete und gut zugängliche Verbindungen der Formel II sind z.B. im Kern bzw. in 2-Stellung alkylierte 1,1-Di-Phenylethylene bzw. deren Gemische (Formel IIa),

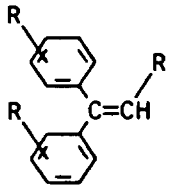

(IIa)

ferner Derivate des 1-Phenyl-1-(1-4)-Naphthyl-ethylens, des 1-Phenyl-1-(2-4)-Pyridyl-ethylens, sowie anderer Derivate des Ethylens wie

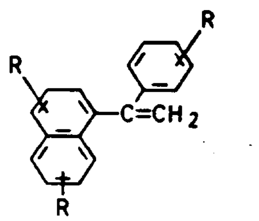

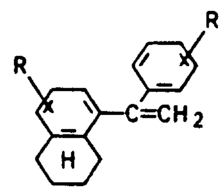

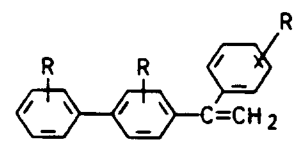

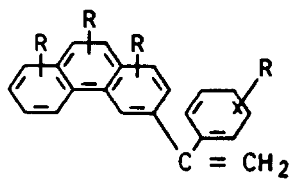

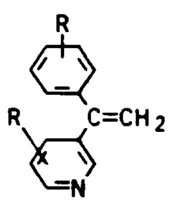

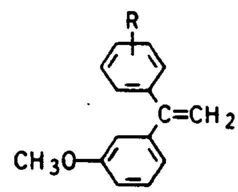

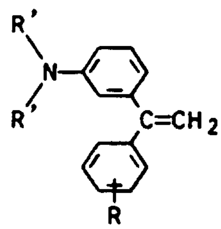

(R' habe die Bedeutung von R, vorzugsweise Alkyl)

Die Herstellung substituierter Diphenylethylene kann als bekannt vorgesetzt werden. Eine sehr brauchbare Methode ist z.B. die Umsetzung geeigneter Acetophenone oder Benzophenone mit gegebenenfalls substituiertem Phenylmagnesiumbromid bzw. Methyl- oder Alkylmagnesiumbromid und Dehydratisierung der in der ersten Reaktionsstufe entstehenden Diphenylalkylcarbinole.

Die unter Wärmeentwicklung ablaufende Metallierung und Dimerisierung der erfindungsgemäßen 1,2-Diarylethylene erfolgt, indem man diese in Gegenwart eines Ethers, eines tertiären Amins und gegebenenfalls eines aliphatischen, alicyclischen und/oder aromatischen Lösungsmittels bei einer Temperatur zwischen -70 und +70 °C, vorzugsweise zwischen 0 und 40 °C mit Lithium umsetzt. Ein Vorteil ist, daß man in Gegenwart von vergleichsweise geringen Mengen an polaren Lösungsmitteln vollständigem Umsatz erreicht. Die im Reaktionsgemisch enthaltene Menge an Ether oder tertiären Aminen sollte jedoch größer als 3 mol pro mol substituierten 1,1-Diarylethylens sein, um vollständigen Umsatz zu gewährleisten.

Besonders gut geeignete aliphatische Ether sind z.B. Dimethylether, Diethylether, Dipropylether, Dibutylether, Diisopropylether, t-Butylmethylether usw., ferner auch alicyclische Ether wie Tetrahydrofuran usw. Als tertiäre Amine sind z.B. Trialkylamine, wie Triethyl-, Trimethyl- oder Dimethylethylamin usw. wie auch alicyclische oder aliphatisch/aromatische Amine wie N-Methyl-piperidin oder Dimethylanilin geeignet. Die Reaktion läuft schon bei Raumtemperatur zügig ab und ist häufig nach 15 bis 60 Minuten beendet, wobei i.a. ein Umsatz von mehr als 95 Gew.-% der Ausgangsverbindung erreicht wird. Benutzt man weniger gut geeignete aromatische Ether wie Anisol oder Phenetol, so dauert die Umsetzung entsprechend länger. Infolge unerwünschter Nebenreaktionen ist dann der Metallgehalt im Reaktionsmedium häufig erheblich höher als der Gehalt an polymerisationsaktivem Alkalimetall.

Da Lithium wegen seiner niedrigen Dichte auf der Oberfläche schwimmt, ist für einen zügigen Ablauf der Reaktion eine gute mechanische Durchmischung des Reaktionsmediums zweckmäßig.

Für viele Aufgaben können so hergestellte Initiatorlösungen unmittelbar ohne Entfernung des polaren Lösungsmittels verwendet werden, z.B., wenn man mit ihrer Hilfe hergestellte Butadienpolymere anschließend hydrieren will und das Hydrierungsprodukt nicht kristallisieren soll.

Sofern man etherfreie Initiatoren braucht, verwendet man leichtflüchtige Ether oder Amine, die nach der Metallierung i.V. abdestilliert werden können. Die Temperatur soll 70 °C, vorzugsweise 35 °C nicht überschreiten. Zweckmäßig setzt man zum Ether oder Amin einen höher als diesen siedenden Kohlenwasserstoff zu.

Niedrig siedende aliphatische Ether, z.B. Dimethylether, Diethylether, Diisopropylether oder t-Butylmethylether oder niedermolekulare tertiäre Amine wie z.B. Triethylamin kann man ohne Schwierigkeiten bis auf einen Restgehalt von weniger als 0,1 mol je mol polymerisationsaktives Lithium entfernen. Die Löslichkeit der erfindungsgemäßen Initiatoren bleibt meistens erhalten, solange mindestens 2 mol Ether je mol polymerisationsaktives Lithiumalkyl vorhanden sind. Wird der Ether vollständig abdestilliert, so können Initiatoren, die aus 1,1-Diphenylethylen mit 3 oder 4 C-Atome enthaltendem Substituenten hergestellt wurden, je nach Lösungsmittel schwer löslich werden und teilweise oder ganz ausfallen.

Initiatoren aus 1,1-Diarylethylenen mit langen, vorwiegend linearen oder nur leicht verzweigten Alkylgruppen und einem Gehalt von mehr als 6 C-Atomen in den Substituenten R bleiben in allen Lösungsmitteln gelöst. Die Mindestgröße der Substituenten hängt außerdem von den Resten Ar ab. Sie muß von Fall zu Fall ermittelt werden.

Lösungen von Initiatoren, die wenig oder keine alicyclischen oder aliphatischen Ether oder tertiäre Aminen enthalten, bauen bei der Polymerisation Diene vorwiegend in 1,4-Konfiguration ein. Die entstehenden Polymeren haben meistens eine breitere Molekulargewichtsverteilung und höhere Molekulargewichte, als bei Verwendung monofunktioneller Initiatoren, bei denen die experimentellen Molekulargewichte mit dem aus dem Verhältnis Monomer/Katalysator rechnerisch erwarteten relativ gut übereinstimmen.

Alle Lösungsmittel und Ausgangsprodukte müssen vor der Verwendung von Verunreinigungen befreit werden. Geeignet ist z.B. die Destillation über ein Metallalkyl wie Aluminiumtriethyl unter Inertgasatmosphäre, z.B. unter trockenem, sauerstoff-freiem Stickstoff oder Argon.

Bei der Reaktion der erfindungsgemäß zu verwendenden substituierten 1,1-Diarylethylene mit Alkalimetall entstehen 1,4-Dialkali-1,1,4,4-Tetraarylbutan-derivate, die in Lösung intensiv gefärbt sind. Die Farbe liegt, je nach Ausgangsprodukt, zwischen dunkelbraun bis blauschwarz.

Bei der Herstellung der Initiatoren finden kaum lithiumverbrauchende Nebenreaktionen statt. Je mol eingesetzten 1,1-Diarylethylens entsteht ca. 1 mol polymerisationsaktive Molekülzentren; diese sog. Polymerisationsaktivität, im folgenden PA genannt, läßt sich durch Titration der Lösung mit i-Propylalkohol unter Inertbedingungen bis zum Farbumschlag auf farblos ermitteln. Sie stimmt im allgemeinen gut überein mit dem Alkaligehalt der Lösung.

Die erfindungsgemäßen Initiatoren sind hervorragend für die Polymerisation von Vinylaromaten, wie Styrol und dessen im Kern und/oder in $\alpha$-Stellung substituierten Alkylderivaten, sowie von konjugierten Dienen wie Butadien, Isopren, 2,3-Dimethylbutadien, Piperylen und anderen geeignet. Die Polymerisation kann in allen Lösungsmitteln erfolgen, die auch bei monofunktionellen Initiatoren benutzt werden. Neben Kohlenwasserstoffen sind auch Aromaten wie Benzol oder Toluol als Lösungsmittel geeignet, die aber Nachteile haben können, z.B. physiologisch bedenklich sind (Benzol) oder eine kettenübertragende Wirkung haben (Toluol), die aliphatische Lösungsmittel wie Cyclohexan oder Hexan usw. nicht haben.

Um einen Einbau von Diolefinen mit hohem Anteil an 1,4-Konfiguration zu erreichen, muß man in etherarmen oder -freien Lösungsmittel polymerisieren. Der Polymerisationsstart ist dann im Vergleich zu monofunktionellen Initiatoren erschwert, aber deutlich verbessert im Vergleich zu bekannten bifunktionellen Initiatoren. Bei erhöhter Starttemperatur entstehen mit guten Katalysatorausbeuten bifunktionell wachsende Polymere mit etwas breiterer Molmassenverteilung, als man mit monofunktionellen Initiatoren erhält, sowie einer Molmasse Mn, die höher liegt, als sie rechnerisch zu erwarten ist. Manchmal werden auch 2 Polymerpeaks nebeneinander gemessen. Die MGW-Verteilung wird enger durch Polymerisation in Gegenwart von 0,1 bis 1 mol je mol PA eines aliphatischen Li-Alkoholats (US-PS 4 754 329, EP-A-210 016) oder auch von Li-Halogeniden. Diese Zusätze beeinflussen die Konfiguration der eingebauten Diolefine nicht.

Der Polymerisationsstart wird erleichtert, wenn man die Diolefine und Vinylaromaten in Gegenwart geringer Mengen, z.B. 0,5 bis 6 Mol je Mol PA an Ethern oder tertiären Aminen polymerisiert. Es entstehen dann Polymere mit enger Molmassenverteilung und etwa der Molmasse, die man, wie bei der anionischen Polymerisation mit monofunktionellen Initiatoren, aus dem Verhältnis Monomer/Initiator errechnen kann. In Gegenwart der Ether oder Amine werden Diene jedoch mit einem in Abhängigkeit von ihrer Menge erhöhten Anteil an 1,2- bzw. 3,4-Konfiguration in die Polymeren eingebaut. Dies kann z.B. vorteilhaft sein,

wenn die Polymeren hydriert werden sollen. Damit die Hydrierungsprodukte nicht kristallisieren und einen tiefen Glaspunkt aufweisen, wie dies für Telechele gewünscht wird, muß der Anteil des in 1,2-Konfiguration eingebauten Butadiens auf ca. 40 bis 50 % angehoben werden. Dafür sind ca. 1 bis 2 Mol THF je Mol PA erforderlich.

Mit bifunktionellen Initiatoren kann man Dreiblockcopolymere in weniger Stufen herstellen als mit monofunktionellen Initiatoren. Polymerisiert man z.B. nacheinander Butadien und Styrol, so erhält man in 2 Stufen 3-Blockcopolymere, die in ihren Eigenschaften solchen Polymeren gleicher Zusammensetzung entsprechen, die nach bekannten Methoden mit monofunktionellem Katalysator durch 3-stufige Polymerisation

Styrol → Butadien → Styrol

hergestellt wurden. Ein Beweis für das bifunktionelle Wachstum von mit erfindungsgemäßen Katalysatoren hergestellten Blockcopolymeren ist es, daß nach oxidativem Abbau des Polybutadienteiles mit Osmiumtetroxid (vgl. Angew. Makromol. Chem. 26 (1972), Seite 207) die verbleibenden Polystyrolblöcke in beiden Fällen das für Dreiblockcopolymere erwartete Molekulargewicht haben.

Die entsprechenden erfindungsgemäßen Natrium- oder Kaliuminitiatoren sind in Kohlenwasserstoffen schwerer löslich. Dennoch läßt sich auch mit Ihnen z.B. Styrol in Cyclohexan oder anderen Kohlenwasserstoffen polymerisieren. Es entstehen jedoch breitere Molekulargewichtsverteilungen als mit Lithiuminitiatoren.

Die Viskosität von mit erfindungsgemäßen Initiatoren hergestellten lebenden Polymerlösungen ist bei gleichem Molekulargewicht höher als die von mit monofunktioinellen Initiatoren hergestellten lebenden Polymeren, da die polaren, ionischen Kettenenden infolge Assoziation ein reversibles, physikalisches Netzwerk bilden. Die Assoziation ist um so höher, je weniger Ether im Lösungsmittelgemisch enthalten ist. Sie wird durch Umwandlung der carbanionischen Endgruppen mit Terminierungsreagentien in z.B. Li-Carboxylat-, Lithiumamid-, Lithiumalkoholat- oder Lithiumthiolatendgruppen so verstärkt, daß bereits bei niedrigen Polymerkonzentrationen und Molgewichten Gelbildung unter Entstehen einer aspikähnlichen Masse eintritt. Mit großer Rührenergie und hohem Drehmoment kann die Masse zur Erreichung vollständigen Umsatzes durchmischt werden. Versetzt man dieses Gel mit Wasser, Alkohol oder anderen aktiven Wasserstoff enthaltenden Verbindungen, so wird die scheinbare (ionische) Vernetzung aufgehoben und die Viskosität der Lösung nimmt um mehrere Größenordnungen ab.

Die Funktionalisierung der mit erfindungsgemäßen Initiatoren hergestellten, an beiden Kettenenden gewachsenen lebenden Polymeren ist insbesondere in Abwesenheit oder Gegenwart einer nur geringen Menge polaren Lösungsmittels mit hoher Ausbeute möglich. Reaktionen zur Funktionalisierung der lebenden Kettenenden sind bekannt. Geeignete Funktionalisierungsreagentien sind z.B. Oxirane, die endständige primäre oder sekundäre Hydroxylfunktionen liefern (vgl. US-PS 3 786 116), oder Thiirane, mit denen endständige Mercaptogruppen eingeführt werden können. Nach der EP-A-0 211 395 oder der europäischen Patentanmeldung 87 103 893.1 kann man Polymere erhalten, die am Kettenende mindestens eine Aminogruppe enthalten. Die Umsetzungen sind eingehend beschrieben, können auch z.T. den folgenden Beispielen entnommen werden.

Die erfindungsgemäßen Polymeren können, wenn sie ganz oder zum Teil aus Dienen aufgebaut wurden, hydriert werden. Die Hydrierung wird mit Hilfe von molekularem Wasserstoff und Katalysatoren auf Basis von Metallen oder Metallsalzen der 8. Nebengruppe des Periodensystems durchgeführt, entweder in homogener oder heterogener Phase. Die Verfahren sind bekannt und werden z.B. in der US-PS 3 113 986, der DE-B-1 222 266, DE-A-2 013 263, DE-B-1 106 961 oder DE-A-1 595 345 beschrieben.

An beiden Kettenenden mit Mercapto-, Hydroxyl- oder Aminogruppen funktionalisierte Polymere sind als Präpolymere für Polyurethane, Epoxidharze und andere Harze oder für deren Modifizierung von besonderem Interesse. Die Herstellung von Epoxidharzen und von elastomeren Polyurethanen, bestehend aus einem "Hartsegment" aus aromatischen Polyisocyanaten und einem "Weichsegment" aus funktionalisierten flexiblen Makromolekülen ist bekannt und wird von H.P. Elias, in Makromoleküle, Seiten 778 bis 780 und 809 bis 812, 4. Aufl. (1981), Hüttig und Wepf Verlag, Basel-Heidelberg-New York und der dort zitierten Literatur beschrieben.

Erfindungsgemäß aus Dienen und/oder auch aus Vinylaromaten hergestellte funktionalisierte Polymere, die an den Kettenenden Amino- oder Hydroxylgruppen enthalten, können z.B. mit Diisocyanaten und anderen Reagentien vernetzt werden. Lösungen solcher Polybutadiene, versetzt mit Diisocyanaten, ausgegossen auf silikoniertes Papier und getrocknet, ergeben bei überwiegend aus Dienen aufgebauten Polymeren elastische, trockene, in Kohlenwasserstoffen unlösliche Filme, die sich von der Unterlage abziehen lassen und hohe reversible Dehnbarkeit aufweisen.

Polybutadiendiole zeichnen sich als "Weichsegmente" in thermoplastischen Polyurethanen durch besonders gute Entmischung von "Hart- und Weichsegmenten" aus, was aus anwendungs- und verarbeitungstechnischen Gründen erwünscht ist, wie dies auch von Becker und Braun, Kunststoffhandbuch, Band 7, Polyurethane, Seite 33 (1983), 2. Auf., Hanser Verlag, München-Wien, beschrieben wird. Bei gleichem Molekulargewicht aus dem Gewichtsmittel weisen solche erfindungsgemäß hergestellten Öle wegen ihrer engen Molekulargewichtsverteilung eine niedrigere Viskosität auf als bekannten Präpolymere, wie z.B. radikalisch hergestellte telechele Polybutadienöle, Polytetrahydrofuran oder Polyester. Sie sind daher besser verarbeitbar.

Erfindungsgemäß erhaltene Polymere weisen im allgemeinen Durchschnittsmolmassen (Gewichtsmittel $\overline{M}_w$) zwischen 500 und 500.000, vorzugsweise 3000 und 130.000 auf, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromatographie", Verlag A. Hüthig, Heidelberg (1982). Gemessen wird in 0,25 gew.-%iger Tetrahydrofuranlösung bei 23 °C und einer Durchflußgeschwindigkeit von 1,2 ml/min. Die Molmasse wird zweckmäßig vor der Funktionalisierung ermittelt, da manche funktionalisierte Polymere von GPC-Säulen adsorbiert werden und diese unbrauchbar machen.

Die Aufarbeitung der Polymeren erfolgt auf übliche Weise, z.B. durch Fällen mit einem Nichtlösungsmittel, durch Abdampfen des Lösungsmittels, oder durch Wasserdampfdestillation. Auch Entgasung auf einen Entgasungsextruder ist möglich.

In den Beispielen wurden die folgenden substituierten 1,1-Diarylethylene als Ausgangsprodukte benutzt.

Tabelle 1: Ausgangsverbindungen für die Katalysatoren

| Nr. | Struktur | Kp °C | Herstellung |
|---|---|---|---|
| A | 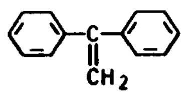 (Vergleich) | - | Janssen Chimica, handelsüblich |
| B | 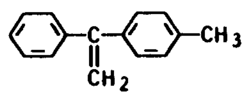 | 106°C<br>0,06 mbar | Phenylmagnesiumbromid + 4-Methyl-acetophenon →<br>Dehydratisierung |
| C | 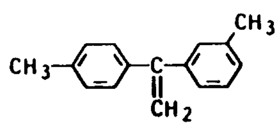 | 102-110°C<br>0,04 mbar | Phenylmagnesiumbromid + 3-Methyl-acetophenon →<br>Dehydratisierung |
| D | 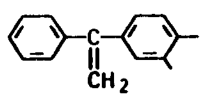 | 125-134°C<br>0,1 mbar | Phenylmagnesiumbromid + Dimethyl-acetophenon →<br>Dehydratisierung |
| E | 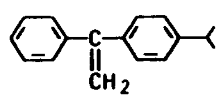 | 121-133°C<br>0,05 mbar | Phenylmagnesiumbromid + 4-Isopropyl-acetophenon →<br>Dehydratisierung |
| F | 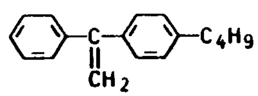 | 135-155°C<br>0,05 mbar | Phenylmagnesiumbromid + 4-Butyl-acetophenon →<br>Dehydratisierung |

Tabelle 1 (Fortsetzung)

| Nr. | Struktur | Kp °C | Herstellung |
| --- | --- | --- | --- |
| G | 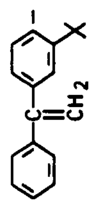 | 122-142°C 0,05 mbar | Phenylmagnesiumbromid + 4-Methyl-3-tert.butyl-acetophenon → Dehydratisierung |
| H | 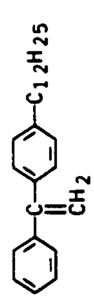 | 175-180°C 0,1 mbar | Phenylmagnesiumbromid + Dodecyl-acetophenon → Dehydratisierung |
| I | 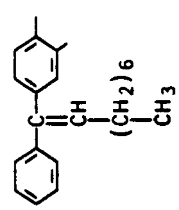 | 180-190°C 0,015 mbar | Octylmagnesiumbromid + Dimethyl-benzophenon → Dehydratisierung |

Die Lösungsmittel (Benzol, Methylcyclohexan, Heptan, Tetrahydrofuran, Diethylether, Triethylamin) wurden durch Destillation mit soviel Butyllithium und einer geringen Menge als Indikator dienenden Styrols, daß eine bleibende Orangefarbe blieb, von Verunreinigungen befreit.

Der bei -25 °C siedende Dimethylether wurde einer Druckflasche entnommen, in einer mit sec.-Butyllithium-Methylcyclohexanlösung beschickten Waschflasche gereinigt und gasförmig in den Reaktor

gegeben.

Stickstoff wurde mit einer Mischung aus Weißöl, 1 Gew.-% Styrol und 5 Gew.-% Lithiumbutyl gewaschen.

Lithium wurde in Form von 1 bis 5 mm großem Granulat der Firma Merck-Schuchardt verwendet.

Für die Polymerisationsversuche wurden handelsübliches Butadien und Styrol durch Destillieren mit 0,5 Gew.-% Triisobutylaluminium gereinigt.

Für die Funktionalisierung wurde 1,5-Diaza-bicyclo(3,1,0)hexan, gemäß europäischer Patentanmeldung 87 103 893, im folgenden Propylendiaziridin genannt, sowie handelsübliches Ethylenoxid, das einer Stahlflasche entnommen und durch Destillieren mit 0,5 % Triisobutylaluminium gereinigt wurde, verwendet.

Analytik:

a) Charakterisierung der erfindungsgemäßen Initiatoren

aa) Bestimmung der Polymerisationsaktivität (PA)

Unter PA wird der Gehalt an polymerisationsaktivem Lithium verstanden. 1 mol difunktioneller Initiator entspricht also 2 mol PA.

Aus dem Reaktor oder dem Vorratsgefäß werden mit einer kalibrierten 5 ml Einwegspritze aus Polypropylen (Hersteller Fa. Braun-Melsungen AG, BRD), die mit einer 15 cm langen Kanüle versehen ist, unter inerten Bedingungen (die Spritze wird durch mehrfaches Aufziehen und Entleeren der Reaktionslösung von Verunreinigungen befreit) eine ca. 2 bis 3 mmol PA enthaltende Menge an Lösung entnommen und durch eine Gummikappe in einen mit Reinstickstoff gespülten 250-$cm^3$-Kolben gegeben, in dem 100 ml Toluol mit einem Magnetrührer gerührt werden. Verunreinigungen im Toluol wurden zuvor mit der Reaktionslösung bis auf schwache Gelbfärbung austitriert. Die intensiv gefärbte Lösung wird dann mit einer 5 $cm^3$ fassenden kalibrierten Injektionsspritze mit 1 n Isopropanol in absolutem Toluol auf farblos titriert. Die Gesamtmenge an PA im Reaktor errechnet sich dann aus

$$\frac{\Sigma\ (\text{Vorrat} + \text{Entnahme})\ [cm^3]}{\text{Entnahme}\ [cm^3]} \quad x\ cm^3\ 1\ n\ \text{i-Propanol} = \text{mmol PA}$$

ab) Bestimmung des Alkaligehaltes

Wie unter aa) beschrieben, wird eine ca. 1 mmol PA entsprechende Menge Initiatorlösung entnommen und unter Stickstoff in eine Mischung aus 10 $cm^3$ Cyclohexan und 1 $cm^3$ Methanol gegeben. Die farblose Mischung wird dann mit 20 $cm^3$ destilliertem Wasser ausgeschüttelt. Nach dem Absetzen wird der klare wäßrige Extrakt mit einer Injektionsspritze entnommen und die Lösung noch 2 x mit je 10 $cm^3$ Wasser extrahiert. Die vereinigten Extrakte werden in einem Erlenmeyerkolben so lange gekocht, bis die organischen Lösungsmittel entfernt sind. Nach Abkühlen wird mit n/10 HCl und Phenolphthalein auf neutral titriert.

$$\frac{\Sigma\ (\text{Vorrat} + \text{Entnahme})\ [cm^3]}{\text{Entnahme} \times 10\ [cm^3]} \quad x\ cm^3\ n/10\ HCl = \text{mmol Alkali}$$

ac) Bestimmung der im Initiator enthaltenen Ether bzw. tertiären Amine

5 $cm^3$ der Initiatorlösung, die ca. 1 bis 3 mmol PA enthalten, werden in einem 25 $cm^3$ fassenden Destillationskolben unter Stickstoff mit x $cm^3$ einer Lösung von 1 n-Isopropanol in Toluol bis zur Entfärbung titriert. Das gesamte Lösungsmittel wird dann in eine mit Methanol/Kohlensäuremischung gekühlte Vorlage übergetrieben und im Destillat der Gehalt an Ethern bzw. Aminen in Gew.-% durch Gaschromatographie bestimmt. Es wurde ein Gaschromatograph der Fa. Shimadzu GC-3BT mit der Säule Carbowax 20M bei

60 ° C benutzt.

Das Molverhältnis Ether/Polymerisationsaktivität (PA) ergibt sich aus

$$\frac{\text{Gew.-\% Ether bzw. tert. Amin x (5 + Verbrauch 1 n i-Propanol [cm}^3\text{]}}{\text{mmol PA x 7,2}} =$$

$$= \frac{\text{mmol Ether/tert. Amine}}{\text{PA}}$$

ad) Bestimmung der Löslichkeit der Initiatoren

Mit einer Injektionsspritze wurden, sofern der Initiator nicht bereits unlöslich vorlag, je 1 cm Initiatorlösung in 10 $cm^3$ Toluol, Methylcyclohexan bzw. n-Heptan gegeben. Bei geringer Löslichkeit setzt sich eine meist flüssige Phase ab. Außerdem wurde die Farbe der überstehenden Lösung beurteilt - tiefere Farbe weist auf bessere Löslichkeit hin.

Beispiel 1 bis 19

In den Beispielen 1 bis 19 wird die Herstellung erfindungsgemäßer Initiatoren beschrieben. Als Reaktor dient ein mit Magnetrührer und Thermometer ausgerüsteter 500 $cm^3$ Vierhalskolben, der einen mit einer Gummikappe verschlossenen Stutzen besitzt und mit Reinstickstoff gespült werden kann. Der Reaktor ist in ein kühlbares Wasserbad eingebaut.

Der Reaktor wird jeweils mit hochgereinigtem Ether oder tertiärem Amin, gegebenenfalls Methylcyclohexan oder anderen inerten Kohlenwasserstoffen und ca. 2,0 g handelsüblichen Lithiumgranulates beschickt. Dazu werden 50 mmol des substituierten 1,1-Diarylethylen gegeben. Die Reaktion setzt bei 25 ° C, je nach Reinheit der Produkte sofort oder nach bis zu 15 Minuten, unter Färbung des Inhaltes und Temperaturerhöhung ein. Es wird so gekühlt, daß 25 ° C nicht überschritten werden. Die Umsetzung ist beendet, wenn Innen- und Badtemperatur wieder übereinstimmen, im allgemeinen nach 30 Minuten bis einer Stunde. In der Lösung werden PA und Li-Gehalt bestimmt. Die Lösung wird dann so unter Inertbedingungen in einen 250-$cm^3$-Destillationskolben gefüllt, auf dem eine isolierte Kolonne mit 20 mm ∅ sitzt, daß das nicht umgesetzte Lithium im Reaktor zurückbleibt. Der Reaktor wird 2mal mit je 25 $cm^3$ Methylcyclohexan gewaschen, die ebenfalls in den Destillationskolben überführt werden. Die Destillationsapparatur wurde zuvor zur Reinigung mit einer Li-Butyllösung ausgekocht. Der Rückflußkühler wird mit Sole von -20 ° C gekühlt. Nach Zugabe von weiteren 50 $cm^3$ Methylcyclohexan wird der Ether bzw. das Amin aus der Initiatorlösung bei allmählich zunehmendem Vakuum bei einem Rücklaufverhältnis von ca. 1:10 so abdestilliert, daß die Temperatur im Sumpf 25 ° C nicht überschreitet. Am Ende der Destillation sind die Temperaturen am Übergang und im Sumpf gleich.

In der Tabelle 2 sind Umsatzgrad, der Gehalt an Polymerisationsaktivität (PA) in Mol/l die Zusammensetzung der Initiatoren und ihre Löslichkeit in 3 wichtigen Kohlenwasserstoffen zusammengestellt.

Tabelle 2

| Beisp.-Nr. | SDAE[1] (Tab. 1) | pol. LM[2] | Umsetzung % d.Th. | Initiatorlösung Konzentration Mol PA/l[12] | Initiatorlösung Molverhältnis PA/PL | Löslichkeit[11] in T[8] | Löslichkeit[11] in M[9] | Löslichkeit[11] in n-H[10] |
|---|---|---|---|---|---|---|---|---|
| Vergleich | A | THF[4] | 100 % | unlöslich[3] | | - | - | - |
| Vergleich | B | DEE | 100 % | unlöslich[3] | | - | - | - |
| Vergleich | C | DEE | 100 % | gefärbte Suspension[3] | | - | - | - |
| Vergleich | D | DEE | 100 % | gefärbte Suspension[3] | | - | - | - |
| 1 | E | DEE | 100 % | 1,5 ölige Emulsion | 0,37[3] | +- | - | - |
| 2 | F | DEE | 100 % | 1,75 | 0,2[3] | - | +- | - |
| 3 | F | THF | 100 % | 1,83 | 1,63[3] | + | + | +- |
| 4 | G | THF | 100 % | 1,70 | 1,52[3] | + | + | +- |
| 5 | G | DEE | 100 % | 1,80 | 0,30[3] | + | + | +- |
| 6 | H | DEE | 100 % | 0,80 | 0,18[3] | ++ | ++ | ++ |
| 7 | H | DMEA[6] | 100 % | 0,75 | <0,05[3] | ++ | ++ | ++ |
| 8 | H | DME[7] | 100 % | 0,85 | 0,12[3] | ++ | ++ | ++ |
| 9 | I | THF | 100 % | 1,20 | 4,00 | ++ | ++ | ++ |

1) substituiertes Diarylethylen
2) polares Lösungsmittel; PL
3) pol. LM abdestilliert
4) Tetrahydrofuran
5) Diethylethylamin
6) Dimethylethylamin
7) Dimethylether
8) Toluol
9) Methylcyclohexan
10) n-Heptan
11) - unlöslich, +- wenig löslich, + löslich, ++ sehr gut löslich
12) Polymerisationsaktivität/l

Polymerisation

Zur Charakterisierung der in den Beispielen beschriebenen Polymerisationsprodukte wurden die folgenden Analysemethoden benutzt.

ba) Molmassen und Molmassenverteilung durch GPC

Zur Analyse wurden die nicht funktionalisierten Proben verwendet. Gemessen wurde mit einem GPC-Gerät der Fa. Waters. Die Molmassen wurden an Hand von Eichkurven durch Vergleich mit standardisierten, zur Eichung geeigneten Polymeren bestimmt (vgl. G. Glöckner, "Polymercharakterisierung durch Flüssigkeitschromatographie", Verlag H. Hüthig, Heidelberg, 1982). Gemessen wurde in 0,25 %iger Lösung in THF bei 23 °C und einer Durchlaufgeschwindigkeit von 1,2 $cm^3$/min. Bestimmt wurde Mn, Mw (Zahlenmittel, Gewichtsmittel) und daraus Mw/Mn als Maß für die Uneinheitlichkeit errechnet. Hierzu wurde ein von der Fa. Polymer Standard Services, Mainz, BRD entwickeltes Computerprogramm benutzt.

Bei Blockcopolymeren wurde als Molmasse empirisch das der Zusammensetzung entsprechende arithmetische Mittel der Molmassen aus den Eichkurven der beiden Homopolymeren zugrundegelegt.

bb) Bestimmung der Viskosität

Die Viskositätszahl (VZ) wurde bei 25 °C in Toluol (0,5 g Polymer in 100 $cm^3$ Toluol) gemäß DIN 51 562 bestimmt.

bc) Bestimmung des Stickstoffgehaltes

Der Gesamtstickstoffgehalt wurde nach Kjeldahl bestimmt.

bd) Bestimmung der mechanischen Eigenschaften

Die mechanischen Daten (Zugfestigkeit bei 300 % Dehnung, Reißfestigkeit und Reißdehnung) wurden bestimmt an Prüfkörpern, die nach DIN 53 455 aus zwischen Teflonscheiben gepreßten 2 mm starken Folien (Preßtemperatur 150 °C, 10 bar ausgestanzt worden waren.

be) Vernetzung mit Diisocyanat

5 g des Polymeren wurden in 25 $cm^3$ trockenem Cyclohexan gelöst und mit 0,33 mmol einer Lösung von Toluylendiisocyanat (TDI) in Cyclohexan versetzt. Nach Durchmischung wurde auf silikoniertes Papier gegossen und bei Zimmertemperatur getrocknet.

bf) Abbau von Butadien/Styrolblockcopolymeren und Bestimmung des Molgewichts der Polystyrolblöcke

Das Verfahren des oxidativen Abbaus des Polybutadienteiles mit Peroxid/Osmiumtetroxid wird von Ph. Kubin-Eschger, Angew. Makromol. Chem. 26 (1972), Seite 207 detailliert beschrieben, so daß sich eine weitere Beschreibung erübrigt.

bg) Bestimmung der OH-Zahl

Zur Bestimmung der OH-Zahl wurden die umgefällten Polybutadienöle zunächst in der Schmelze bei 140 °C und einem Druck von 0,4 mbar so lange gerührt, bis alle flüchtigen Anteile entfernt waren und keine Gasentwicklung mehr zu beobachten war. Ca. 2 g des Öles wurden unter Reinstickstoff in einem 250-$cm^3$-Kolben in hochgereinigtem Cyclohexan gelöst und mit 50 $cm^3$ THF gemischt. Die Lösung wurde nach Zugabe von 0,5 $cm^3$ als Indikator dienendem 1,1-Diphenylethylen mit einer 0,1 n Lösung von n-Li-Butyl in Cyclohexan bis zum Auftreten einer schwach orange-Färbung austitriert. Die Titration erfolgte durch eine Gummikappe mit einer kalibrierten Spritze. Vom ermittelten Verbrauch wurde der in gleicher Weise ermittelten Blindwert abgezogen.

Die Methode wurde durch $^1$H-NMR-Spektroskopie auf ihre Brauchbarkeit geprüft. In den $^1$H-NMR-Spektren der OH-terminierten Polybutadiene erscheinen die Methylenprotonen der $-CH_2$-OH-Gruppe als deutlich separierte Absorption im Bereich von $\delta = 3{,}6$ ppm.

Aus dem Intensitätsverhältnis dieser Resonanzen im Vergleich zum Absorptionsspektrum der Polybutadien-Hauptkette kann der Gehalt an OH-Gruppen, ausgedrückt als OH-Zahl, errechnet werden. Die Arbeitsmethodik kann z.B. des Buch "Spektroskopische Methoden in der organischen Chemie" von Manfred Hesse, Herbert Meier, Bernd Zeck, Georg Thieme Verlag, Stuttgart - New York, 3. Auflage, 1987, entnommen werden. Vgl. auch z.B. Polym. J. 17 (1985), No. 8, pp. 977 bis 980 (Short Comm.).

Die Polymerisation

Für die Polymerisationsversuche diente als Reaktor ein mit einem Rührer, einem mit Sole von -30 °C betriebenem Sole-Rückflußkühler, einem kalibrierten, ebenfalls mit Sole-Rückflußkühler versehenem Tropftrichter, einem mit einer Gummikappe verschlossenen Stutzen sowie einer Reinstickstoffspülung versehener 10-l-Glaskolben mit Heiz- bzw. Kühlmantel. Der Stickstoff wird durch waschen mit einem 2 Gew.-% Lithiumbutyl enthaltenden Weißöl von Spuren von Feuchtigkeit und Sauerstoff befreit.

Der Reaktor wurde zunächst mit einer Lösung von Lithiumbutyl in Cyclohexan, der etwas Styrol zugesetzt wurde, ausgekocht. Die als Indikator für die Aktivität der Lösung dienende orangene Farbe muß bis zum Schluß vorhanden sein. Die Lösung wurde abgelassen und der Reaktor mit 3 l Cyclohexan befüllt, das zuvor über eine Säule mit Molekularsieb gereinigt wurde. Die noch vorhandenen Verunreinigungen wurden bei 40 °C mit einer erfindungsgemäßen Initiatorlösung durch die Gummikappe mit einer kalibrierten Spritze bis zum Auftreten eines Orangetones austitriert.

In den Beispielen 10 bis 14 wurden 3-Blockcopolymere S-B-S der Zusammensetzung 27 Gew.-% Styrol, 73 Gew.-% Butadien mit dem Zielmolekulargewicht 60.000 hergestellt. Dazu wurden in den Reaktor nach dem Austitrieren bei 70 bis 80 °C ca. 50 $cm^3$ Butadien und 9 mmol PA der jeweiligen Initiatoren sowie 9 mMol Lithium-t-Butylat gegeben und nach Beginn der Polymerisation das restliche Butadien (insgesamt 300 $cm^3$ = 187,5 g) bei ca. 70 °C so zugesetzt, daß ein schwacher Rückfluß bestand.

Nach Zulaufende wurde eine Stunde bei 60 °C gehalten, nach Entnahme einer Probe 89 $cm^3$ = 81 g Styrol zugegeben und zwischen 50 und 60 °C auspolymerisiert. Nach 60 Minuten wurde abgekühlt, durch Eingießen in 5 l Ethanol, das 0,5 Gew.-% Di-t-butyl-p-kresol enthielt, gefällt. Nach mehrfachem Auskneten mit Alkohol wurden die Polymeren bei 60 °C über Nacht im Vakuumtrockenschrank getrocknet.

Die folgende Tabelle 3 mit den Beispielen 10 bis 14 gibt die Versuchsdaten und die analytischen Meßwerte wieder.

**Tabelle 3: Herstellung von 3-Block-Styrol-Butadien-Styrol-Blockcopolymeren**
**Ziel: Molmasse 60.000, 27 % Polystyrolgehalt**
**Analytische Daten**

| Beispiel Nr. | Katalysator aus Beispiel | GPC: PB-Block Mn x $10^{-3}$ | Endprodukt Mn x $10^{-3}$ | Mw/Mn | $OsO_4$-Abbau Polystyrolblock Mn x $10^{-3}$ Th. | gefunden | Qualität der Polymeren |
|---|---|---|---|---|---|---|---|
| 10 | 1 | 46,3 | 66,7 | 1,05 | 9,0 | 11,0 | sehr zäh und elastisch |
| 11 | 3 | 50,6 | 69,3 | 1,06 | 9,36 | 9,55 | sehr zäh und elastisch |
| 12 | 2 | 50,5 | 70,4 | 1,11 | 9,5 | 11,4 | sehr zäh und elastisch |
| 13 | 6 | 47,4 | 68,0 | 1,06 | 9,18 | 11,3 | sehr zäh und elastisch |
| 14 | 9 | 55,7 | 78,0 | 1,23 | 10,5 | 13,7 | sehr zäh und elastisch |

Die folgende Tabelle 4 vergleicht die mechanischen Eigenschaften und die Butadienkonfiguration des Beispiels 11 mit einem konventionell hergestellten Material.

Tabelle 4

| Mechanische Eigenschaften und Konfiguration | | | | | | |
|---|---|---|---|---|---|---|
| Bei-Nr. | Zugfestigkeit bei 300 % Dehnung [N/mm$^2$] | Reißfestigkeit [N/mm$^2$] | Reißdehnung [%] | Butadienkonfiguration FTIR[2)] | | |
| | | | | % 1,4-trans | % 1,2- | % 1,4-cis |
| 11 | 2,80 | 6,32 | 815 | 45,6 | 22 | 29,3 |
| Vgl.[1)] | 1,95 | 9,62 | 557 | 57,4 | 12,2 | 30,4 |

1) Das SB S-3-Blockcopolymerisat, 27 Gew.-% Styrol, 73 Gew.-% Butadien und MGW: 68.000, wurde mit Lithiumbutyl durch aufeinanderfolgende Polymerisation von Styrol - Butadien - Styrol in Cyclohexan bei 70 ° C nach bekannten Methoden hergestellt.
2) FTIR = Fourieranalyse der Infrarotspektren

Aus den Daten geht hervor, daß das mit dem erfindungsgemäßen Initiator hergestellte Polymer dem Vergleich in den mechanischen Eigenschaften mindestens entspricht.

Beispiel 15

Herstellung eines durch Aminoendgruppen funktionalisierten Polybutadienöles

In der Apparatur gemäß Beispiel 10 bis 14, die jedoch mit einem Kreuzbalkenmetallrührer für gute Durchmischung und Anwendung eines hohen Drehmomentes ausgestattet war, wurden 3000 cm$^3$ Cyclohexan und 50 cm$^3$ Butadien gegeben. Bei 65 ° C wurden 16,5 mMol (33 mMol PA) des Initiators aus Beispiel 14 zugegeben, und weitere 84 cm$^3$ (zusammen 83 g) Butadien so zugefahren, daß gerade kein Rückfluß auftritt. Nach Beendigung des Zulaufes wird zur Vervollständigung der Polymerisation noch 30 Minuten bei 60 ° C gehalten, dann auf 40 ° C abgekühlt und mit 40 mmol Propylendiaziridin funktionalisiert, wobei die Lösung gallertartig viskos wird. Nach 30 Minuten Rühren wird der Reaktorinhalt mit 20 l Ethanol gefällt. Das sich absetzende Polybutadienöl wird 3 mal mit Ethanol ausgerührt, mit 0,2 g Di-t-butyl-p-kresol gemischt und in Vakuum bei 60 ° C getrocknet. Es entsteht ein gießbares Polybutadienöl vom Mn 6300 (GPC) und Mw/Mn 1,06. Der Stickstoffgehalt nach Kjeldahl beträgt 0,81 % (Theorie: 0,89 %). Die FTIR-Analyse zeigt eine Konfiguration von 41,4 % 1,2-, 23,4 %, 1,4-cis und 35,5 % 1,4-trans-Struktur für das eingebaute Polybutadien.

In 5 g des Öles wurden in einem Penicillinglas bei Zimmertemperatur mit einem Glasstab schnell 4 mmol Hexamethylendiisocyanat (0,6 g) eingerührt und auf Silikonpapier gegossen. Die Mischung erstarrt in Minuten zu einem farblosen, elastischen Gummi.

Beispiele 16 bis 18

Herstellung von durch OH-Gruppen funktionalisierten Polybutadienölen

Es wurde gearbeitet wie im Beispiel 15, jedoch wurde mit Ethylenoxid funktionalisiert. Dabei tritt eine noch stärkere Erhöhung der Viskosität als in Beispiel 15 auf, und die Masse nimmt eine aspikähnliche Konsistenz an. Nachdem man 1 Std. gerührt hat, um eine vollständige Durchmischung bzw. Umsatz zu gewährleisten, wird durch Zugabe von einigen cm$^3$ Methanol abgebrochen, wobei eine wasserdünne Lösung entsteht. Anschließend wurde aufgearbeitet wie im Beispiel 15. Die folgende Tabelle gibt für die Beispiele 16 bis 18 die Rezepturen und die Analysendaten an.

Tabelle 5

| Beispiel | Initiator | | Ziel Molmasse | Butadien (g) | GPC-Analyse | | OH-Zahl | |
|---|---|---|---|---|---|---|---|---|
| | aus Beisp. | mMol PA | | | Mn | Mw/Mn | Th.*) | gef. |
| 16 | 3 | 16,6 | 10.000 | 83 | 11.307 | 1,06 | 10,0 | 11,5 |
| 17 | 4 | 33,0 | 5.000 | 83 | 6.213 | 1,01 | 18,0 | 18,5 |
| 18 | 5 | 33,0 | 5.000 | 83 | 9.736 | 1,12 | 11,5 | 12,0 |

## Patentansprüche

**1.** Alkalimetallorganische Verbindung der allgemeinen Formel I

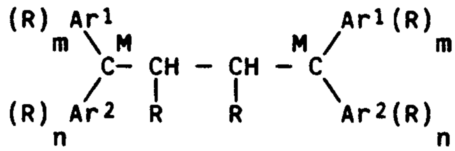

(I)

wie sie erhalten wird durch Umsetzen eines entsprechenden Diarylethylens der allgemeinen Formel II mit Alkalimetall (M)

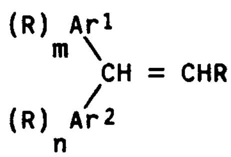

(II)

wobei $Ar^1$ und $Ar^2$ gleiche oder verschiedene Aryl- oder Hetarylreste bedeuten, die einen oder mehrere ggf. getrennte oder kondensierte Ringe aufweisen, und wobei R mindestens einen von Wasserstoff verschiedenen Substituenten bedeutet, der gegenüber Alkalimetall bzw. -alkyl chemisch indifferent ist, ausgewählt aus der Gruppe die umfaßt lineares oder verzweigtes Alkyl, Aralkyl oder Cycloalkyl mit 1 bzw. 7 bzw. 5 bis 25 C-Atomen sowie deren Derivate, die chemisch indifferente Molekülbestandteile enthalten, mit der Maßgabe, daß die Summe der C-Atome aller R - bezogen auf (II) - mindestens 3 und m und n jeweils eine ganze Zahl bis zu 4 ist.

**2.** Verwendung einer Verbindung I des Anspruchs 1, in der M Lithium bedeutet, zur Herstellung von Polymeren, deren Monomere der anionischen Polymerisation zugänglich sind.

## Claims

**1.** An organic compound of an alkali metal, of the formula I

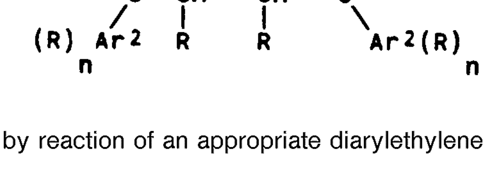

(I)

which is obtained by reaction of an appropriate diarylethylene of the formula II with an alkali metal (M)

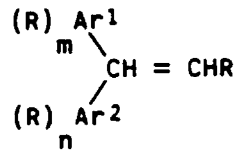

(II)

where Ar¹ and Ar² are identical or different aryl or hetaryl radicals which have one or more rings which are either separate or fused, and where R is at least one substituent different from hydrogen and which is chemically inert to the alkali metal or its alkyl, selected from the group comprising linear or branched alkyl, aralkyl or cycloalkyl with 1 or 7 or 5 to 25 carbon atoms and derivatives thereof which contain chemically inert components in the molecule, with the proviso that the total of carbon atoms in all the R, based on (II), is at least 3, and m and n are each an integer up to 4.

2. The use of a compound I as claimed in claim 1, in which M is lithium, for the preparation of polymers whose monomers are amenable to anionic polymerization.

**Revendications**

1. Composé organique d'un métal alcalin répondant à la Formule générale I

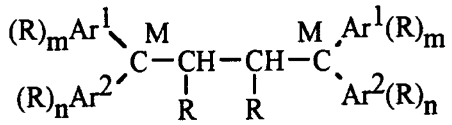

(I)

tel qu'il peut être obtenu par conversion d'un diaryléthylène correspondant répondant à la Formule générale II avec un métal alcalin (M)

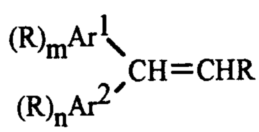

(II)

dans laquelle $Ar^1$ et $Ar^2$ représentent des résidus aryles et hétéroaryles identiques ou différents, qui présentent un ou plusieurs cycles, éventuellement séparés ou condensés, et dans laquelle R représente au moins un substituant différent de l'atome d'hydrogène qui est chimiquement inerte vis-à-vis d'un métal alcalin, respectivement d'un alkyle de métal alcalin, choisi parmi le groupe formé par les groupes linéaires ou ramifiés d'alkyles, d'arylalkyles ou de cycloalkyles avec 1 à 7, respectivement 5 à 25 atomes de carbone, de même que leurs dérivés qui présentent des composants moléculaires chimiquement inertes, sous réserve que la somme des atomes de carbone de tous les R [se rapportant à (II)] vaut au moins 3 et que m et n représentent, respectivement, un nombre entier allant jusqu'à 4.

2. Utilisation d'un composé I selon la Revendication 1, dans lequel M représente un atome de lithium, pour la fabrication de polymères dont les monomères sont accessibles à la polymérisation anionique.